# NEUE EUROPÄISCHE PATENTSCHRIFT

(11) **EP 0 253 013 B2**
(45) Veröffentlichungstag und Bekanntmachung des Hinweises auf die Entscheidung über den Einspruch: **12.05.1993**
(45) Hinweis auf die Patenterteilung: 31.05.1989
(21) Anmeldenummer: 86109801.0
(22) Anmeldetag: 17.07.1986
(51) Int. Cl.: F16L 55/16, B29C 63/34

(54) **Verfahren zum Sanieren einer im Erdreich verlegten Rohrleitung**
Method for restoring a pipeline buried in the ground
Procédé pour restaurer une conduite souterraine

(43) Veröffentlichungstag der Anmeldung: 20.01.1988
(73) Patentinhaber: Müller, Hans, D-32816 Schieder-Schwalenberg (DE)
(72) Erfinder: Müller, Hans, D-4938 Schieder-Schwalenberg (DE); Suerbaum, Hermann, D-4938 Schieder-Schwalenberg/Lothe (DE)
(74) Vertreter: Stracke, Alexander, Dipl.-Ing.

(56) Entgegenhaltungen:
- EP-A- 0 060 670
- EP-A- 0 100 029
- DE-C- 2 240 153
- DE-C- 2 362 784
- DE-C- 3 513 956
- GB-A- 1 449 455
- Umwelt, Heft 3, 1986, S. 223,224
- First International Conference on the internal and external protection of pipes, September 9-II, Sept. 1975

## Beschreibung

Die vorliegende Erfindung betrifft ein Verfahren zum Sanieren einer im Erdreich verlegten Rohrleitung, vorzugsweise eines Abwasserkanals mittels eines Auskleideschlauches, dessen Querschnitt ein wenig geringer ist als der lichte Querschnitt der zu sanierenden Rohrleitung, der aus einer äußeren Deckschicht und einer angrenzenden, harzabsorbierenden Innenschicht besteht, dievordem Einbringen des Auskleideschlauches mit Harz getränkt wird, wobei der Auskleideschlauch im zusammengelegten Zustand mittels eines Seiles und einer Winde in die Rohrleitung eingezogen wird.

Sie bezieht sich ferner auf eine Auskleidung zur Verwendung bei dem Sanierungsverfahren.

Aus der DE-C 2 240 153 ist bereits ein Verfahren der eingangs genannten Art zum Auskleiden eines Kanals bekannt. Die Auskleidung ist an derAußenseite mit einer undurchlässigen Schicht versehen, wodurch eine vorherige Reinigung des Kanals entfallen soll. Es hat sich jedoch herausgestellt, daß trotzdem eine gründliche Reinigung notwendig ist, da in einem Kanal immer Ablagerungen vorhanden sind, die sich nachträglich noch lösen könnten. Ferner wird beim Einziehen mittels eines Seiles und einer Winde die äußere, undurchlässige Schicht beschädigt. Dies hat zur Folge, daß das üblicherweise verwendete Polyesterharz mit Wasser oder Feuchtigkeit in Berührung kommt, wodurch eine Reaktion ausgelöst wird, die die chemischen Eigenschaften verändert und die physikalischen Werte verschlechtert. Die Lebensdauer eines sanierten Kanals wird dadurch ungünstig beeinflußt. Außerdem ist noch nachteilig, daß keine Verbindung zwischen deräußeren, undurchlässigen Schicht des Auskleideschlauches mit der Innenwandung des Kanals erfolgen kann, so daß undichte Stellen, wie z.B. Risse oder schadhafte Rohrverbindungen nicht abgedichtet werden. Demzufolge verbleibt das eindringende Wasser zunächst in dem zwischen der Auskleidung und der Innenwandung des Kanals liegenden Ringraum und dringt dann durch sich bildende Rinnen in die Rohrleitung ein. Da darüber hinaus der Außenumfang der Auskleidung ungefähr dem Innenumfang des Kanals entspricht, kommt es beim Einbringen derAuskleidung zu einerzu Unebenheiten führenden Faltenbildung, wodurch die Bildung von Ablagerungen noch begünstigt wird.

Der vorliegenden Erfindung liegt gemgegenüber die Aufgabe zugrunde, ein Verfahren sowie eine Auskleidung der eingangs genannten Art so zu verbessern, daß unter Erhöhung der Lebensdauer eines sanierten Kanals in einfacher Weise in der Rohrwandung vorhandene undichte Stellen abgedichtet werden, und daß der Auskleideschlauch ohne Faltenbildung in die zu sanierende Strecke der Rohrleitung einbringbar ist.

Die Lösung dergesteiiten Aufgabe ergibtsich aus den im kennzeichnenden Teil des Anspuches 1 aufgeführten Merkmalen.

Gemäß dem Erfindungsgemäßen Verfahren wird in die harzabsorbierende Schicht des Auskleideschlauches mehr Harz eingefüllt als diese überhaupt aufnehmen kann. Da die äußere Deckschicht mit Längsschlitzungen versehen wird, tritt die überschüssige Harzmenge durch diese Öffnungen hindurch, wenn vom Inneren des Auskleideschlauches Druck aufgebracht wird. Dadurch wird ein zusätzlicher Mantel zwischen der bestehenden Rohrleitung und dem Auskleideschlauch gebildet, derverhindert, daß eindringendes Wasser oder Feuchtigkeit in die harzabsorbierende Schicht gelangt, so daß diese besonders geschützt ist. Ferner hat sich gezeigt, daß das durch die Schl itzu ngen austretende Harz in Risse und Verbindungsmuffen der bestehenden Rohrleitung eindrigt und diese somit gegen Wasserinfiltration abdichtet, so daß man davon ausgehen kann, daß diese Infiltration zumindest ausgeschaltet ist. Es hat sich außerdem noch gezeigt, daß das überschüssige Harz auch in Haarrisse und Kleinstöffnungen von Neurohren eindringt.

Durch die am Umfang verteilten Längsschlitzungen findet ein Auslaufen bzw. eine Tränenbildung des mit Harz getränkten Auskleideschlauches während seines Transportes und während des Einziehens in eine Rohrleitung nicht, statt da sich die Perforierung solange schließt, bis von innen her der Druck aufgebracht wird. Zweckmäßigerweise wird zur Vermeidung unkontrollierter Harzverteilung innerhalb des Auskleideschlauches dieses vorzugsweise tixotropiert. Da beim Aufbau eines Innendruckes das aus der Perforation austretende Harz ein Eindringen von Wasser und Feuchtigkeitverhindert, ist diese Perforation im Sinne eines Einwegeventils zu sehen. Selbst wenn das austretende Harz mit vorhandenem Wasser oder Feuchtigkeit reagiert und somit minderwertig wird, wird auf alle Fälle noch erreicht, daß durch die Perforation der definierte Rohrquerschnitt weder mit Wasser noch mit Feuchtigkeit in Berührung kommt. Zusätzlich ist noch eine Verankerung zwischen der Innenseite der zu sanierenden Rohrleitung und dem Auskleideschlauch geschaffen. Durch diesen Verbund wird einerseits die Statik des Rohres verbessert und andererseits eine nach Art einer Sandwich-Konstruktion ausgebildete Rohrleitung geschaffen, wodurch verhindert wird, daß bei Temperaturschwankungen das Altrohr und der Auskleideschlauch unter Reibungsbildung sich unterschiedlich ausdehnen. Der Querschnitt des Auskleideschlauches wird zweckmäßigerweise so gewählt, daß dieser bei Aufbringung des Innendruckes so gedehnt wird, daß sich beim Einziehen evtl. gebildete Falten auflösen. Die Aufbringung des Druckes erfolgt in besonders einfacher Weise durch Umstülpen des Hilfsschlauches in derArt, daß die Innenseite nach außen gebracht wird. Der notwendige Aufwand um zu verhindern, daß das Druckmedium mit der harzabsorbierenden Schicht in Berührung kommt, ist dabei besonders gering.

Da der Hilfsschlauch für die Funktion der sanierten Rohrleitung nicht notwendig ist, kann dieser nach dem Abbinden und Aushärten des Kunstharzes aus dem Inneren des Auskleideschlauches zur Wiederverwendung entfernt werden. Sofern dies nicht der Fall ist, wird die Sicherheit noch weiter erhöht.

Die Auskleidung zur Verwendung bei dem Verfahren kann so gestaltet sein, daß der Querschnitt des nicht ausgeformten Auskleideschlauches im Bereich zwischen 90 und 95 % des lichten Querschnittes der zu sanierenden Rohrleitung liegt. Der zum Ausformen notwendige Druck wird dadurch noch auf einem relativ geringen Wert gehalten. Um eine Beschädigung des Auskleideschlauches während des Einbringens in die Rohrleitung zu verhindern, ist es besonders vorteilhaft, daß dieser während des Einziehens auf einem in der Rohrleitung stehenden Wasserbett gleitet. Außerdem wird dadurch noch die Reibung und somit der Kraftbedarf der Winde verringert. Die Festigkeit des Auskleideschlauches wird noch erhöht, wenn die harzabsorbierende Innenschicht aus einem mit Glasfasern verstärkten Material besteht.

Weitere Kennzeichen und Merkmale der vorliegenden Erfindung sind Gegenstand von weiteren Unteransprüchen. Anhand der Zeichnungen erfolgt die Beschreibung eines Ausführungsbeispiels.

Es zeigt:
Fig. 1 eine zwischen zwei Konstrollschächten liegende Teilstrecke einer Rohrleitung mit einem eingezogenen Auskleideschlauch in Schnittdarstellung,
Fig. 2 die gleiche Teilstrecke während des Einstülpens des Hilfsschlauches,
Fig. 3 die sanierte Teilstrecke nach Fig. 1,
Fig. 4 einen Teilschnitt längs der Linie 4-4 in der Fig. 3 und
Fig. 5 eine Einzelheit nach Fig. 2, das Einführen des Hilfsschlauches in den Kontrollschacht zeigend.

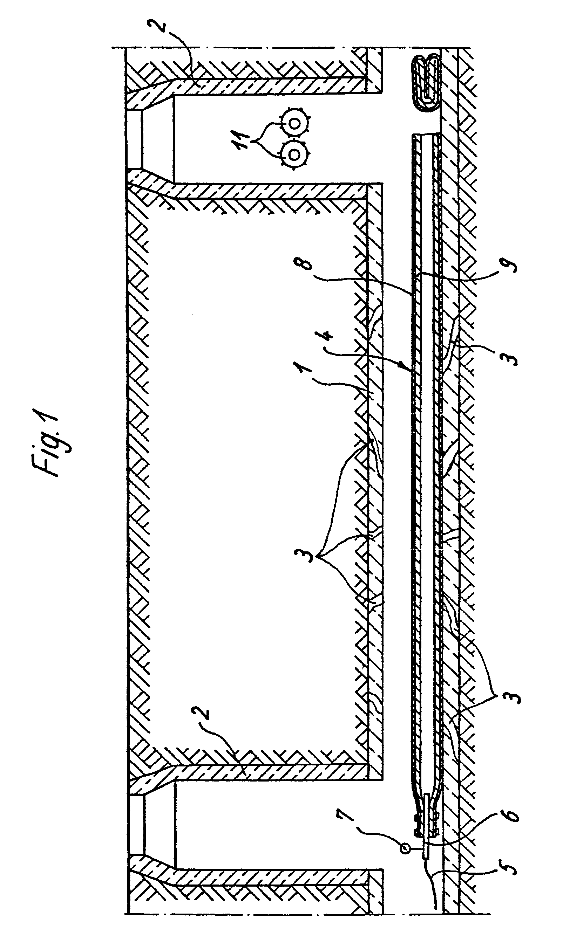

Eine im Erdreich verlegte Rohrleitung 1 ist mit mehreren nach außen führenden Kontrollschächten 2 versehen, wobei in den Figuren 1 bis 3 lediglich das zwischen zwei Kontrollschächten liegende Teilstück der Rohrleitung 1 dargestellt ist. Die Rohrleitung 1 ist beispielsweise mit mehreren Rissen 3 versehen. In das zwischen den Kontrollschächten 2 liegende Teilstück der Rohrleitung 1 ist bereits ein Auskleideschlauch 4 mittels eines Seiles 5 und einer nicht dargestellten Winde eingezogen. Das freie Ende des Seiles 5 und das zugewandt liegende Ende des Auskleideschlauches 4 sind an einem Zugkörper 6 festgelegt, der mit einem nicht dargestellten Luftausströmkanal versehen ist, der mit einem am Zugkörper 6 befestigten Ausströmventil 7 leitend verbunden ist. Das Einziehen eines Rohres oder eines Schlauches ist in der einschlägigen Branche allgemein bekannt. Der Auskleideschlauch 4 besteht aus einer äußeren Deckschicht 8 und einer angrenzenden Innenlage 9, die aus einem Harz absorbierenden Material hergestellt ist. In der in der Figur 1 dargestellten Lage ist die Innenlage 9 bereits mit Harz getränkt. Der Auskleideschlauch 4 könnte beispeilsweise aus einem Fliesstoff miteineräußeren Kunststoffbeschichtung, wie zum Beispiel Polyurethan hergestellt werden. Aus der Figur 1 ist außerdem noch die Form des Auskleideschlauches 4 erkennbar. Danach ist eine Seite des Schlauches nach Art einer Seitenfalte nach innen gelegt. In nicht dargestellter Weise könnte in die zuvor gereinigte Rohrleitung ein Wasserbett eingefüllt werden, dessen Spiegelhöhe so bemessen ist, daß der Schlauch mit seiner Breite auf diesem Wasserbett aufliegt.

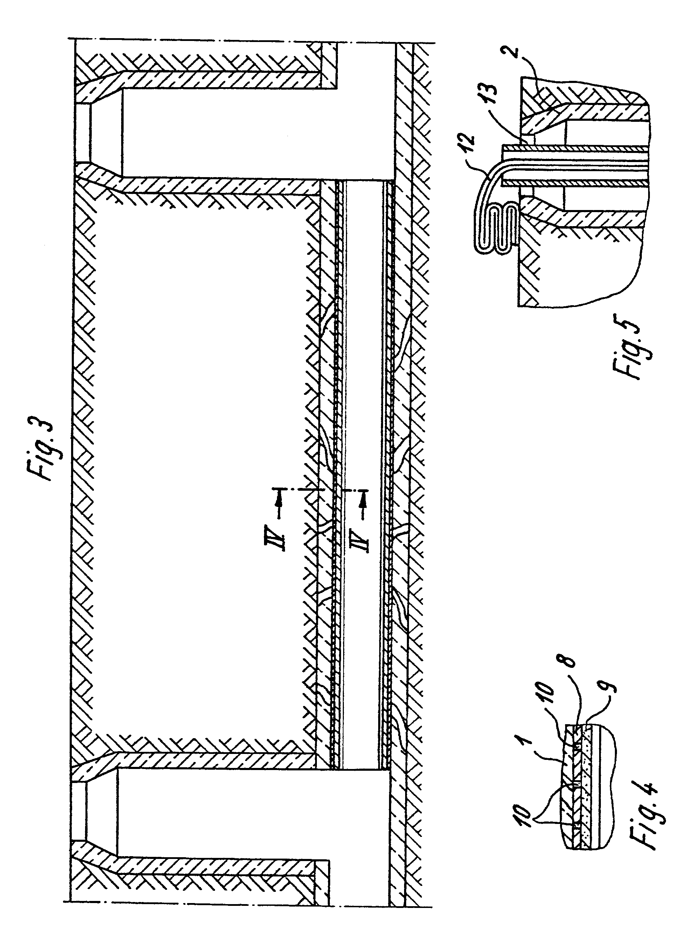

Wie aus der Figur 4 erkennbar, ist die äußere Deckschicht 8 mit Durchtrittöffnungen 10 versehen, die während des Einbringens des Auskleidungsschlauches 4 in die Rohrleitung 1 durch mit vorstehenden Nadeln ausgerüstete Perforierwalzen 11 eingestochen werden. Die Perforierwalzen 11 sind Teil eines nicht dargestellten Hilfsaggregates, welches im vorliegenden Ausführungsbeispiel so gestaltet ist, daß die Perforierwalzen 11 im unteren Bereich des Kontrollschachtes 2 liegen, durch den der Auskleideschlauch 4 in die Rohrleitung 1 eingezogen wird. Das Einbringen des Harzes kann direkt an der Baustelle oder aber extern erfolgen, jedoch immer vor dem Perforieren der äußeren Deckschicht 8.

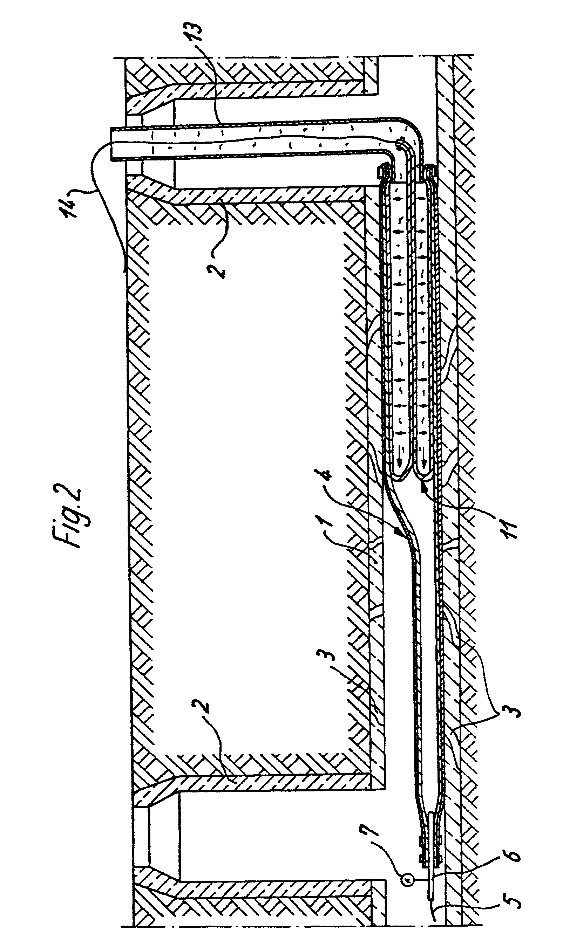

Aus der Figur 1 ist das Einbringen eines Hilfsschlauches 12 erkennbar. In den Kontrollschacht2 ist ein Inversionsrohr 13 gebracht, welches nach Art eines Rohrbogens ausgebildet ist, wobei jedoch der vertikal verlaufende Teil der Höhe des Kontrollschachtes 2 angepaßt ist. An dem horizontal verlaufenden Teil ist das vordere, freie Ende des Hilfsschlauches 12 und das Ende des Auskleideschlauches 4 befestigt. Dabei wurde der Befestigungsrand des flachliegenden Schlauches nach außen umgestülpt. Durch Einfüllen von Wasser in das Inversionsrohr 13 stülpt sich der Hilfsschlauch 12 durch den Druckaufbau laufend fortschreitend um. Zur Konstanthaltung des Druckes braucht lediglich die Höhe der Wassersäule in dem Inversionsrohr 13 konstant gehalten zu werden. Wie durch die Pfeile in dem bereits umgestülpten Hilfsschlauch angedeutet, richtet sich der Druck gegen das vordere Ende und auch senkrecht gegen die Wandung des Hilfsschlauches 12. Dadurch wird des Auskleideschlauch 4 ausgeformt, gedehnt und gegen die Innenwandung der Rohrleitung 1 gedrückt. Das in der Innenlage 9 überschüssig vorhandene Harz wird durch den Druck durch die Durchtrittsöffnungen 10 der Deckschicht 8 gepreßt und bildet einen Film zur Verbindung mit der Innenwand der Rohrleitung. Außerdem gelangt das Harz noch in die Risse 3. Nach dem der Auskleideschlauch 4 vollkommen ausgeformt ist, wird das Harz beispielsweise durch Wärmezufuhr ausgehärtet. Der Auskleideschlauch 4 ist danach im Sinne eines in die Rohrleitung 1 eingezogenen Rohres zu sehen, welches außerdem mit der ursprünglichen Rohrleitung 1 fest verbunden ist. Sofern der Hilfsschlauch 12 im Auskleideschlauch 4 verbleibt, werden die Enden abgeschnitten. Aus der Figur 2 ist erkennbar, daß an dem freien, nachlaufenden Ende des Hilfsschlauches 12 ein Seil 14 befestigt ist, womit der Hilfsschlauch 12 nach der Ausformung des Auskleideschlauches 4 wieder herausgezogen werden kann. Dieses Seil 14 dient außerdem zur Vortriebsregulierung des Hilfsschlauches 12.

In der Figur4 sind die Durchtrittsöffnungen 10 als zylindrische Bohrungen dargestellt. Es sind jedoch auch andere Formen, wie zum Beispiel Schlitze möglich.

Aus der Figur 5 ist erkennbar, daß der Hilfsschlauch 12 zum Transport und zum Einbringen in den Auskleideschlauch 4 nach Art eines Leporello zusammengelegt ist. Während des Umstülpens erfolgt dann eine Abnahme von der Oberseite aus.

### Bezugszeichen

1 Rohrleitung
2 Kontrollschacht
3 Risse
4 Auskleideschlauch
5 Seil
6 Zugkörper
7 Ausströmventil
8 Deckschicht
9 Innenlage
10 Durchtrittsöffnung
11 Perforierwalze
12 Hilfsschlauch
13 Inversionsrohr
14 Seil

## Patentansprüche

1. Verfahren zum Sanieren einer im Erdreich verlegten Rohrleitung (1), vorzugsweise eines Abwasserkanals, mittels eines Auskleideschlauches (4), dessen Querschnitt ein wenig geringer ist als der lichte Querschnitt der zu sanierenden Rohrleitung (1), der aus einer äußeren Deckschicht (8) und einer angrenzenden, harzabsorbierenden Innenschicht (9) besteht, die vor dem Einbringen des Auskleideschlauches (4) mit Harz getränktwird, wobei der Auskleideschlauch (4) im zusammengelegten Zustand mittels eines Seiles (5) und einer Winde in die Rohrleitung (1) eingezogen wird, dadurch gekennzeichnet, daß eine die Sättigungsmenge übertreffende Harzmenge in die harzabsorbierende Schicht (9) eingefüllt wird, daß nach dem Einbringen des Harzes in die Innenschicht (9) die Deckschicht (8) zur Bildung von Durchtrittsöffnungen für das überschüssige Harz mit am Umfang verteilten, wie Einwegventile wirkenden Längsschlitzungen versehen wird, die nur bei einem entsprechenden Innendruck geöffnet werden, und daß ferner zurAusformung des Auskleideschlauches (4) und zur Förderung des überschüssigen Harzes durch die Längsschiitzungen nach außen ein mit einem Druckmedium beaufschlagter Hilfsschlauch (4) eingestülpt und die mit Harz belegte Deckschicht (8) gegen die Innenwandung der Rohrleitung gepreßt wird.

2. Verfahren nach Anspruch 1, dadurch gekennzeichnet, daß der Innenraum des Auskleideschlauches (4) während des Einstülpens des Hilfsschlauches (12) entlüftet wird.

3. Verfahren nach Anspruch 1, dadurch gekennzeichnet, daß nach dem Abbinden und Aushärten des Harzes der Hilfsschlauch (12) aus dem Inneren des Auskleideschlauches (4) entfernt wird.

4. Verfahren nach Anspruch 1, dadurch gekennzeichnet , daß der Auskleideschlauch (4) einseitig nach Art einer Seitenfalte flach zusammengelegt und während des Einziehens in die Rohrleitung (1) auf einem in der Rohrleitung (1) stehenden Wasserbett gleitet.

## Claims

1. A method of renovating a pipe line (1) which is laid in the ground, preferably a sewer, by means of a lining tube (4) whose cross-section is a little smaller than the internal cross-section of the pipe line (1) to be renovated, and which comprises an outer cover layer (8) and an adjoining resin- absorbent inner layer (9) which is impregnated with resin prior to the operation of introducing the lining tube (4), wherein the lining tube (4) is pulled into the pipe line (1) in the collapsed condition by means of a cable (5) and a winch, characterised in that an amount of resin which exceeds the saturation amount is introduced into the resin-absorbent layer (9), that after the introduction of the resin into the inner layer (9) the cover layer (8) is provided with circumferentially distributed longitudinal slits acting as one-way valves which are opened only at a corresponding internal pressure to form through openings for the excess resin, and that in addition for expansion of the lining tube (4) and for conveying of the excess resin through the longitudinal slits outwardly an auxiliary tube (12) which is acted upon by a pressure fluid is introduced into the lining tube (4) by being turned inside out and the resin-coated cover layer (8) is pressed against the inside wall surface of the pipe line (1).

2. A method according to claim 1 characterised in that the space inside the lining tube (4) is vented during the operation of introducing the auxiliary tube (12).

3. A method according to claim 1 characterised in that after setting and hardening of the resin the auxiliary tube (12) is removed from the interior of the lining tube (4).

4. A method according to claim 1 characterised in that the lining tube (4) is collapsed into a flat condition at one side in the manner of a side fold and slides on a bed of water in the pipe line (1) during the operation of pulling same into the pipe line (1).

## Revendications

1. Procédé pour restaurer une conduite souterraine (1), de préférence un conduit d'évacuation des eaux usées, au moyen d'un flexible d'habillage (4) dont la section est légèrement inférieure à la section intérieure de la conduite (1) à restaurer, et qui est constitué d'une couche protectrice extérieure (8) et d'une couche intérieure (9) contiguë absorbant la résine, qui est imprégnée de résine avant la mise en place du flexible d'habillage (4), le flexible d'ahbillage (4) étant tiré à l'état assemblé dans la conduite (1) au moyen d'un câble (5) et d'un treuil,
caractérisé en ce qu'on remplit la couche (9) absorbant la résine d'une quantité de résine supérieure à la quantité de saturation, en ce qu'après avoir introduit la résine dans la couche intérieure (9), la couche protectrice (8) est pourvue, afin de former des ouvertures de passage pour la résine excédentaire, de fentes longitudinales réparties sur la circonférence et agissant à la manière de clapets anti-retour, qui sont ouvertes seulement dans le cas d'une pression intérieure appropriée, et en ce qu'en outre, afin de façonner le flexible d'habillage (4) et d'évacuer vers l'extérieur la résine excédentaire à travers les fentes longitudinales, un flexible auxiliaire (12) sollicité par un fluide sous pression est introduit retourné dans le flexible déhibillage (4), et la couche protectrice (8) chargée de résine est pressée contre la paroi intérieure de la conduite.

2. Procédé selon la revendication 1, caractérisé en ce que l'intérieur du flexible d'habillage (4) est désaéré pendant l'introduction du flexible auxiliaire (12) retourné.

3. Procédé selon la revendication 1, caractérisé en ce qu'une fois la résine prise et durcie, le flexible auxiliaire (12) est sorti de l'intérieur du flexible d'habillage (4).

4. Procédé selon la revendication 1, caractérisé en ce que le flexible d'habillage (4) est disposé d'un côté à plat, en formant comme pli latéral, et en ce que, pendant son introduction par traction dans la conduite (1), il glisse sur un lit d'eau immobile présent dans la conduite (1).
